# EUROPÄISCHE PATENTSCHRIFT

(11) **EP 3 160 737 B1**
(45) Veröffentlichungstag und Bekanntmachung des Hinweises auf die Patenterteilung: **13.03.2019**
(21) Anmeldenummer: 16725777.3
(22) Anmeldetag: 06.05.2016
(51) Int. Cl.: B32B 15/095, B32B 15/082, B32B 15/085, B32B 37/12, B32B 38/04, B32B 38/00, B32B 38/06

(54) **VERFAHREN ZUR HERSTELLUNG EINES STANZBAUTEILS**
METHOD FOR PRODUCING A PUNCHED PART
METHODE DE FABRICATION D'UNE PIECE ESTAMPEE

(30) Priorität: 06.05.2015 DE 102015107032
(43) Veröffentlichungstag der Anmeldung: 03.05.2017
(73) Patentinhaber: CCL Design GmbH, 42653 Solingen (DE)
(72) Erfinder: FRENKLER, Dieter, 58332 Schwelm (DE); FLEISSNER, Peter, 42659 Solingen (DE)
(74) Vertreter: Albrecht, Ralf
(86) Internationale Anmeldenummer: PCT/EP2016/060239
(87) Internationale Veröffentlichungsnummer: WO 2016/177904

(56) Entgegenhaltungen:
- EP-A2- 1 304 217
- EP-A2- 1 304 217
- WO-A1-2014/187982
- WO-A2-2009/120547
- DE-A1-102005 015 340
- DE-A1-102005 015 340
- US-A1- 2011 143 151
- US-A1- 2011 143 151
- US-B1- 8 083 878

## Beschreibung

Die Erfindung betrifft ein Verfahren zur Herstellung eines Stanzbauteils, umfassend die Schritte: a) auf eine Oberfläche eines Metallblechs wird ein Polymerfilm laminiert, b) das Metallblech wird einem Stanzvorgang unterworfen, wodurch das Stanzbauteil generiert wird, wobei ein Polymerfilm verwendet wird, der an seiner beim Laminiervorgang zum Metallblech weisenden Seite mit einem kaltfließfähigen Haftklebstoff versehen ist. Des Weiteren betrifft die Erfindung ein Stanzbauteil, umfassend ein Metallblech und einen Polymerfilm, der auf eine Oberfläche des Metallblechs laminiert und so mit dem Metallblech stoffschlüssig verbunden ist, wobei der Polymerfilm tiefziehfähig ausgebildet ist, wobei der Polymerfilm zur Herstellung der stoffschlüssigen Verbindung zwischen dem Metallblech und der Polymerfilm an seiner zu dem Metallblech weisenden Seite mit einem kaltfließfähigen Haftklebstoff versehen ist.

Stanzbauteile der vorbezeichneten Art, die mit einem Polymerfilm als Schutzschicht versehen sind, werden beispielsweise als Einstiegsleisten für Kraftfahrzeuge verwendet. Durch die Witterungseinflüsse und ständige Beanspruchung sind sie einer hohen Abnutzung unterworfen. Insbesondere kann an den Stanzflächen und in den Übergangsbereichen zwischen dem Metallblech, das beispielsweise aus Aluminium oder auch einem rostfreien Cr-Ni-Stahl bestehen kann, und dem Polymerfilm Korrosion auftreten. Insbesondere kommen Spaltkorrosion und Filiformkorrosion häufig vor.

Verfahren zur Herstellung eines solchen Stanzbauteils, das eine Oberflächenbeschichtung in Form eines Polymerfilms zum Korrosionsschutz aufweist, sind beispielsweise aus der WO 96/25292 bekannt. Der Polymerfilm ist hier an seiner Oberseite mit einer kratzfesten Schicht versehen, die auf dem Korrosionsschutz dient. An der metallblechweisenden Unterseite des Polymerfilms ist eine Schicht aus einem heißschmelzenden Klebstoff vorgesehen, die beim Laminieren des Polymerfilms auf das Metallblech thermisch aktiviert wird.

Ein weiteres Verfahren zur Herstellung eines Stanzbauteils ist aus der WO 2009/120547 A2 bekannt. Bei diesem Verfahren wird auf eine Oberfläche eines Metallblechs ein Polymerfilm laminiert und das Metallblech einem Stanzvorgang unterworfen, wodurch das Stanzbauteil generiert wird. Dabei ist der Polymerfilm an seinem beim Laminiervorgang zum Metallblech weisenden Seite mit einem Klebstoff versehen.

Die aus dem Stand der Technik bekannten Verfahren zur Herstellung eines Stanzbauteils haben sich bewährt. Es wird jedoch als nachteilig erachtet, dass bei dem Stanzvorgang Spaltbildung auftritt, wenn der Polymerfilm den Deformationen des Metallsubstrats nicht folgen kann. Um die Spaltbildung zu verhindern, muss der gesamte Aufbau der Beschichtungen den Deformationen des Metallblechs folgen. Dies ist in der Praxis bisher nicht vollständig sicherzustellen, da beispielsweise geringe Abweichungen in der Verankerung des Polymerfilms zu einer Rückstellung des Polymerfilms und damit zur Spaltbildung führen können.

Insbesondere bei Verwendung von heißschmelzendem Klebstoff wird das Risiko der Spaltbildung vergrößert, da der Stanzvorgang bei Raumtemperatur erfolgt und heißschmelzender Klebstoff in diesem Temperaturbereich brüchig wird.

Außerdem ist bei einer gebürsteten Metalloberfläche ein erhöhtes Risiko der Spaltbildung zu verzeichnen, da die Metalloberfläche durch den Bürstvorgang eine ausgeprägte Feinstruktur aufweist. Die vielen mikroskopisch kleinen Öffnungen zwischen Polymerfilm und Metalloberfläche sind Schwachstellen, die bei entsprechender Belastung der Stanzkante zur Spaltbildung führen können. Diese wiederum führt zur Spaltkorrosion, wenn sich ein Spalt mit einer Breite zwischen 0,02 mm und 0,5 mm bildet und aufgrund von Sauerstoffmangel eine Passivierung der Metalloberfläche nicht ablaufen kann. Die Spaltkorrosion tritt bei fast allen Metallen auf, einschließlich rostfreien Cr-Ni-Stählen. Außerdem tritt Spaltkorrosion auch bei Spalten auf, die sich zwischen Metall und Kunststoff bilden.

Bei der Spaltkorrosion kommt es durch die hohe Sauerstoffkonzentration am Beginn des Spaltes zu einer kathodischen Reaktion, während am Ende des Spaltes eine anodische, Metall abtragende Reaktion auftritt.

Das Erscheinungsbild der Filiformkorrosion sind fadenförmige Unterwanderungen zwischen Beschichtung und Metalloberfläche. Bei Aluminium ist diese Korrosionsart, die der Spaltkorrosion elektrochemisch entspricht, ein häufig zu verzeichnender Schadensgrund.

Ausgehend von dem Stand der Technik ist es eine Aufgabe der vorliegenden Erfindung, ein Verfahren zur Herstellung eines Stanzbauteils und ein Stanzbauteil der eingangs genannten Art anzugeben, welche es ermöglichen, Spalt- und Filiformkorrosion bei dem Stanzbauteil zu vermeiden.

Diese Aufgabe wird bei einem Verfahren zur Herstellung eines Stanzbauteils der eingangs genannten Art dadurch gelöst, dass zur Ausführung des Stanzvorgangs ein Stempel und eine korrespondierende Matrize verwendet werden, die derart ausgestaltet sind, dass ein Spalt zwischen dem Stempel und der Matrize vorhanden ist, so dass der Polymerfilm (3) und der kaltfließfähige Haftklebstoff (4) während des Stanzvorgangs vor ihrer Durchtrennung entlang der geschnittenen Seitenflächen des Metallblechs gezogen werden. Bei einem Stanzbauteil der eingangs genannten Art wird entsprechend die Aufgabe dadurch gelöst, dass der Polymerfilm mit dem Haftklebstoff über die geschnittenen Seitenflächen des Metallblechs gezogen sind, wobei sich die Anordnung aus Polymerfilm und Haftklebstoff an den Seitenflächen anlegt, um die Seitenflächen zu versiegeln.

Erfindungsgemäß wird somit der Polymerfilm, insbesondere ein TPU-Film, mittels eines kaltfließfähigen Haftklebstoffs, im Englischen auch pressure sensitive adhesive (PSA) genannt, an dem Metallblech als Substrat fixiert. Der kaltfließfähige Haftklebstoff besitzt eine hohe Fließfähigkeit bei Raumtemperatur, die es ermöglicht, den Polymerfilm mit dem Haftklebstoff während des Stanzvorgangs über die geschnittenen Seitenflächen des Metallblechs zu ziehen, wobei sich die Anordnung aus Polymerfilm und Haftklebstoff an den Seitenflächen anlegt, wodurch eine optimale Versiegelung der Seitenflächen gewährleistet ist. Hinzu kommt, dass durch die während des Stanzvorgangs auftretenden Querkräfte der Haftklebstoff zwischen dem Polymerfilm und dem Metallblech im Bereich der Seitenflächen weggedrückt wird und austritt, so dass der Übergangsbereich zwischen dem Polymerfilm und dem Metallblech versiegelt wird. Die so erfolgte Kantenversiegelung ist thermisch und mechanisch gut belastbar. Im Ergebnis wird durch den Einsatz eines kaltfließfähigen Haftklebstoffs eine Spaltbildung zwischen dem Polymerfilm und dem Metallblech und somit das Auftreten von Spalt- und Filiformkorrosion zuverlässig vermieden.

Als Polymerfilm wird in bevorzugter Weise ein Polyurethan, insbesondere thermoplastisches Polyurethan verwendet, das hervorragende Selbstheilungs- und Tiefziehfähigkeiten aufweist. Alternativ können beispielsweise auch Polyvinylchlorid oder Polyethylen eingesetzt werden.

Voraussetzung dafür, dass der mit dem kaltfließfähigen Haftklebstoff ausgestattete Polymerfilm die geschnittene Seitenfläche des Metallblechs abschließen kann, ist, dass zur Ausführung des Stanzvorgangs ein Stempel und eine korrespondierende Matrize verwendet werden, die derart ausgestaltet sind, dass ein Spalt zwischen dem Stempel und der Matrize vorhanden ist, so dass der Polymerfilm und der kaltfließfähige Haftklebstoff während des Stanzvorgangs vor ihrer Durchtrennung entlang der geschnittenen Seitenfläche des Metallblechs gezogen werden. Dabei ist der Spalt so bemessen, dass er kleiner ist als die Summe der Schichtdicken von Polymerfilm und Haftklebstoff.

In üblicher Weise kann vor dem Laminieren in Schritt a) die Oberfläche des Metallblechs gebürstet und/oder geschliffen werden. Das Bürsten dient der Erzeugung einer mattierten Oberfläche des Metallblechs. Ebenso muss die zu laminierende Oberfläche des Metallblechs gereinigt werden. Insbesondere ist es erforderlich, das nach dem Bürsten und/oder Schleifen auf der Oberfläche verbleibende Öl von der Oberfläche zu beseitigen.

Gemäß einer Ausführungsform der Erfindung ist vorgesehen, dass während des Reinigens Öl und/oder Fett von der Oberfläche weggebrannt wird, wobei insbesondere für die Verbrennung ein gasförmiger Brennstoff verwendet wird, dem Silan zugesetzt wird, das sich bei der Verbrennung unter Bildung von SiO₂ -Partikeln, welche sich auf der zu reinigenden Oberfläche ablagern, zersetzt. Das Wegbrennen des Öls von der Oberfläche des Metallblechs erfolgt üblicherweise mit einer Temperatur von etwa 2000°C. Da der Verbrennungsvorgang schlecht gesteuert werden kann, erfolgt die Verbrennung vorzugsweise in zwei Stufen, wobei insbesondere bei der zweiten Verbrennungsstufe für die Verbrennung ein gasförmiger Brennstoff verwendet wird, dem Silan zugesetzt wird. Dieses zersetzt sich bei der Verbrennung unter Bildung von SiO₂ -Partikeln, welche sich auf der zu reinigenden Oberfläche ablagern. Diese Ablagerungen wiederum bilden Verankerungspunkte, die es erlauben, das Metallblech ohne das Aufbringen einer dazwischen liegenden Konversionsschicht unmittelbar zu bedrucken.

Gemäß einer Ausgestaltung der vorliegenden Erfindung ist vorgesehen, dass nach dem Laminieren in Schritt a) und vor dem Stanzen im Schritt b) der Polymerfilm ausgeheizt wird. Hierdurch werden die Polymerkristalle des Polymerfilms geschmolzen, um einen amorphen Polymerfilm zu erhalten. Mit anderen Worten wird durch das Ausheizen die Kristallinität verringert, wodurch der Polymerfilm eine hohe Permeabilität erhält, so dass Lösungsmittel in den Polymerfilm eindringen kann. Hierdurch ergibt sich eine gute Verankerung für einen anschließenden Druckvorgang auf den Polymerfilm.

Zur Amorphisierung des Polymerfilms kann das Ausheizen bei einer Temperatur zwischen 60°C und 120°C, bevorzugt bei einer Temperatur zwischen 80°C und 100°C, besonders bevorzugt bei einer Temperatur von 90°C, und für eine Zeitdauer von 10 min bis 120 min, bevorzugt für eine Zeitdauer von 20 min bis 60 min, besonders bevorzugt für eine Zeitdauer von 30 min erfolgen.

Ferner kann vor oder gleichzeitig mit dem Stanzvorgang in Schritt b) das Metallblech einem Prägevorgang unterworfen werden. Hierdurch wird das Metallblech entsprechend der anwendungsspezifischen Erfordernisse plastisch umgeformt.

Weiterhin kann der Polymerfilm vor oder nach dem Stanzvorgang einem Druckvorgang unterworfen werden, um den Polymerfilm mit einem gewünschten Design zu versehen. Anschließend wird dann der Polymerfilm mit einer Hartstoffschicht, insbesondere in Form eines Nanolacks, beschichtet. Wenn der Polymerfilm keinem Druckvorgang unterworfen wird, kann alternativ ein Polymerfilm verwendet werden, der standardmäßig mit einer Hartstoffschicht ausgestattet ist. Durch die Hartstoffschicht wird eine leichte Reinigung des Stanzbauteils ermöglicht. Außerdem wird der Polymerfilm vor Beschädigungen durch Kratzer etc. geschützt.

In an sich bekannter Weise kann nach dem Stanzvorgang in Schritt b) das Stanzbauteil einer tiefziehartigen Umformung unterworfen werden. Dabei entspricht die maximale Tiefe der Umformung dem 1 bis 10 fachen, bevorzugt dem 5 bis 10 fachen, besonders bevorzugt dem 5 bis 7 fachen, der Dicke des Metallblechs. Hierdurch wird das Stanzbauteil entsprechend den anwendungsspezifischen Erfordernissen umgeformt. Dabei ist die maximale Tiefe der Umformung durch die Tiefziehfähigkeit des Haftklebstoffs begrenzt.

Das Metallblech kann eines oder eine Mehrzahl der folgenden Materialien umfassen oder daraus bestehen: Aluminium, einer Aluminiumlegierung, austenitischem Cr-Ni-Stahl. Spaltkorrosion tritt bei vielen Metallen auf, darunter auch bei nichtrostenden, austenitischen Cr-Ni-Stählen. Daher ist ein erfindungsgemäßer Korrosionsschutz bei diesen Materialien sinnvoll.

Ferner kann der Polymerfilm eines oder eine Mehrzahl der folgenden Materialien umfassen oder daraus bestehen: Polyvinylchlorid, Polyethylen, Polyurethan, insbesondere thermoplastisches Polyurethan. Diese Materialien eignen sich wegen ihrer mechanischen Eigenschaften wie Deformation unter Zugspannung, Rückstellungsvermögen (Selbstheilung), maximale Reißspannung und vor allem Tiefziehfähigkeit, sowie ihrer anwendungstechnischen Eigenschaften wie gute Bedruckbarkeit, gute bis sehr gute Beschichtungseigenschaften und gute bis sehr gute Bewitterungseigenschaften. Außerdem bieten sie aufgrund ihrer Polymermatrix einen zuverlässigen Diffusionsschutz.

Der Polymerfilm kann eine Filmdicke zwischen 1 µm bis 500 µm, bevorzugt eine Filmdicke zwischen 20 µm bis 250 µm, besonders bevorzugt eine Filmdicke zwischen 30 µm bis 160 µm, aufweisen. Mit derartigen Filmdicken wurden sehr gute und reproduzierbare Ergebnisse erzielt.

In üblicher Weise kann der Polymerfilm eine Hartstoffschicht, insbesondere in Form eines Nanolacks, aufweisen. Durch die Hartstoffschicht, die eine geringe Oberflächenspannung aufweist, wird eine leichte Reinigung des Stanzbauteils ermöglicht. Darüber hinaus wird der Polymerfilm vor Beschädigungen wie Kratzer etc. geschützt.

Ferner kann der Haftklebstoff eine selbstklebende Acrylatformulierung, insbesondere einen lösungsmittelbasierten Acrylatklebstoff, umfassen oder daraus bestehen. Diese Haftklebstoffe zeichnen sich durch hohe Klebkraft und besondere Scherstabilität aus. Darüber hinaus verfügen sie über sehr gute Beständigkeit gegenüber salzhaltigem Wasser.

Weiterhin kann der Haftklebstoff einschichtig oder mehrschichtig auf dem Polymerfilm angeordnet sein. Dabei kann der Polymerfilm insgesamt eine Menge von 10 g/m² bis 100 g/m², bevorzugt von 20 g/m² bis 60 g/m², an Haftklebstoff aufweisen. Mit dieser Menge an Haftklebstoff wurden sehr gute und reproduzierbare Ergebnisse erzielt.

Der Haftklebstoff kann eine Glasübergangstemperatur zwischen 10°C bis -100°C, bevorzugt eine Glasübergangstemperatur zwischen -10°C bis -80°C, besonders bevorzugt eine Glasübergangstemperatur zwischen -20°C bis -50 °C, aufweisen. Üblicherweise weisen Haftklebstoffe Glasübergangstemperaturen in diesem Temperaturbereich auf.

Weitere Merkmale und Vorteile der vorliegenden Erfindung werden anhand der nachfolgenden Beschreibung einer Ausführungsform eines erfindungsgemäßen Stanzbauteils unter Bezugnahme auf die Zeichnung deutlich. Darin ist:
- Figur 1: eine schematische Querschnittsansicht der Schichtstruktur eines Stanzbauteils gemäß der vorliegenden Erfindung,
- Figur 2: schematisch die verschiedenen Stufen eines Stanzvorgangs zur Herstellung des Stanzbauteils, und

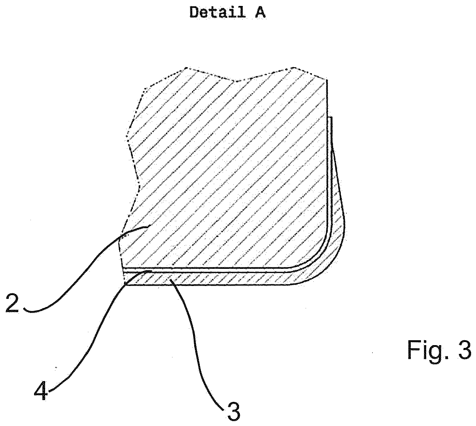

- Figur 3: die Einzelheit A aus Figur 2 in vergrößerter Darstellung.

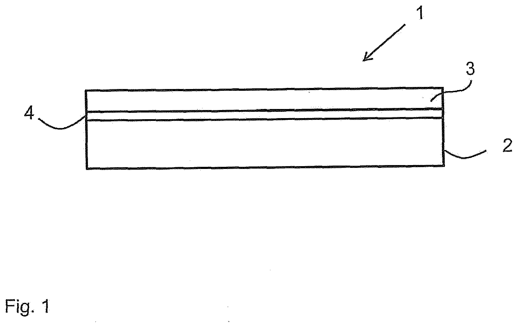

Die Figur 1 zeigt ein Stanzbauteil 1 gemäß einer ersten Ausführungsform der vorliegenden Erfindung, das vor Spalt- und Filiformkorrosion geschützt ist, wobei die Schichtstruktur des Stanzbauteils 1 schematisch im Querschnitt dargestellt ist. Das Stanzbauteil 1 umfasst ein Metallblech 2, das aus Aluminium besteht und eine Dicke von 0,7 mm aufweist.

Ferner umfasst das Stanzbauteil 1 einen selbstklebenden Polymerfilm 3, der durch Laminieren auf die Oberfläche des Metallblechs 2 aufgebracht ist, sodass eine stoffschlüssige Verbindung mit dem Metallblech 2 besteht. Der Polymerfilm 3 ist tiefziehfähig bis zu 3,5 mm ausgebildet, besteht aus thermoplastischem Polyurethan und weist eine Filmdicke von 100 µm auf.

In nicht gezeigter Weise weist der Polymerfilm 3 an seiner äußeren Oberfläche eine nicht dargestellte Hartstoffschicht in Form eines Nanolacks auf, die eine geringe Oberflächenspannung aufweist und damit eine leichte Reinigung des Stanzbauteils 1 ermöglicht. Die Herstellung der Hartstoffschicht erfolgt mittels lösungsmittelhaltiger Stoffe, die 3 µm bis 6 µm in den Polymerfilm 3 eindiffundieren können. Daher hat die Hartstoffschicht keinen Einfluss auf die Tiefziehfähigkeit des Polymerfilms 3.

Der Polymerfilm 3 ist zur Herstellung der stoffschlüssigen Verbindung zwischen dem Metallblech 2 und dem Polymerfilm 3 mit einem kaltfließfähigen Haftklebstoff 4 oder PSA an seiner zu dem Metallblech 2 weisenden Seite versehen. Dabei weist der Polymerfilm 3 eine Menge von 40 g/m² an Haftklebstoff 4 auf. Dieser ist einschichtig auf dem Polymerfilm 3 angeordnet, besteht aus einem lösungsmittelbasierten Acrylatklebstoff 4 und weist eine Glasübergangstemperatur zwischen -20°C bis -50°C auf. Lösungsmittelbasierter Acrylatklebstoff 4 hat sich aufgrund seiner hohen Klebkraft, besonderen Scherstabilität und sehr guten Beständigkeit gegenüber salzhaltigem Wasser bewährt. Beim neutralen Salzwassersprühtest, ein standardisiertes Prüfungsverfahren zur Bewertung der Korrosionsschutzwirkung, wurde nach 500 Stunden keine Veränderungen bei diesem Haftklebstoff 4 und dem Polymerfilm 3 festgestellt.

Bei Aluminium ist die Filiformkorrosion, die der Spaltkorrosion elektrochemisch entspricht, ein häufig zu verzeichnender Schadensgrund. Bei der Spaltkorrosion kommt es durch die hohe Sauerstoffkonzentration am Beginn des Spaltes zu einer kathodischen Reaktion, während am Ende des Spaltes eine anodische, Metall abtragende Reaktion stattfindet. An dieser Stelle tritt oft der Beginn der Filiformkorrosion auf. Das Erscheinungsbild der Filiformkorrosion sind fadenförmige Unterwanderungen zwischen Beschichtung und Metalloberfläche. Durch die Tiefziehfähigkeit des Polymerfilms 3 und die Fließfähigkeit des Haftklebstoffs 4 bei Raumtemperatur wird sichergestellt, dass beim Stanzvorgang die gesnittenen Seitenflächen des Metallblechs 2 gut abgedeckt und versiegelt werden, wie im Nachfolgenden noch erläutert werden wird.

Diese Kantenversiegelung ist thermisch und mechanisch gut belastbar. Zudem können kleine mechanische Beschädigungen des Polymerfilms 3 durch Nachfließen beseitigt werden (selbstheilende Wirkung des TPU-Films 3). Hierdurch wird eine Spaltbildung und somit das Auftreten von Spalt- und Filiformkorrosion zuverlässig vermieden. Die Kantenversiegelung ist zudem durch die Dicke des Polymerfilms und des Haftklebstoffs ein Mittel zum Schutz vor Kontaktkorrosion, die bei einer leitenden Verbindung zwischen zwei unterschiedlich edlen Metallen in Gegenwart eines Elektrolyten auftritt. Weiterhin dient der Polymerfilm 3 als Schutz vor Lochkorrosion und selektiver Korrosion, indem er korrosionsauslösende Partikel aufnimmt. Lochkorrosion wird beispielsweise durch Schleifstaubpartikel ausgelöst, während selektive Korrosion durch Legierungsbestandteile ausgelöst wird.

Bei der Herstellung des Stanzbauteils 1 wird zunächst die Oberfläche des Metallblechs 2 grob gereinigt. Anschließend wird die Oberfläche des aus Aluminium bestehenden Metallblechs 2 gebürstet. Das Bürsten der Oberfläche des Metallblechs 2 erfolgt mittels rotierender, oszillierender Bürsten mit harter Fadenbelegung und dient der Erzeugung einer mattierten Oberfläche des Metallblechs 2. Anschließend wird das nach dem Bürsten auf der Oberfläche des Metallblechs 2 verbleibende Öl weggebrannt. Die Verbrennung erfolgt zweistufig bei einer Temperatur von etwa 2000°C. Dabei wird als Brennstoff für die zweite Stufe der Verbrennung ein Gas verwendet, dem Silan zugesetzt ist, welches sich bei der Verbrennung unter der Bildung von SiO₂-Partikeln zersetzt, welche sich auf der Oberfläche des Metallblechs 2 ablagern. Diese SiO₂-Partikeln bilden Verankerungspunkte, die es ermöglichen, dass Metallblech unter Verzicht auf eine Konversationsschicht unmittelbar zu bedrucken.

Nach dem Reinigen der Oberfläche und gegebenenfalls Bedrucken derselben wird der mit dem kaltfließfähigen Haftklebstoff 4 versehene Polymerfilm 3 auf das Metallblech 2 laminiert.

Um einen amorphen Polymerfilm 3 zu erhalten, wird nach dem Laminieren der Polymerfilm 3 ausgeheizt. Das Ausheizen erfolgt bei einer Temperatur von 90°C und für eine Zeitdauer von 30 Minuten.

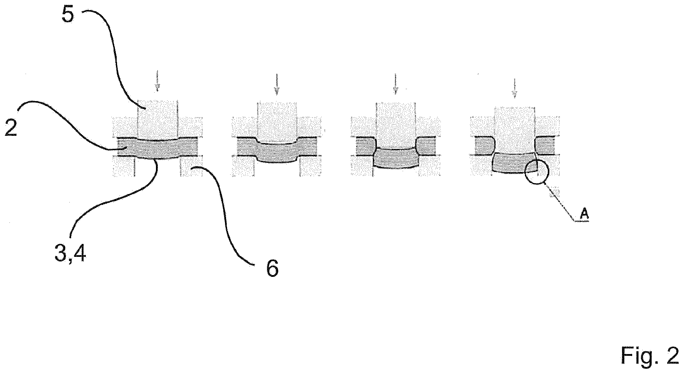

Anschließend wird das Metallblech 2 bei Raumtemperatur einem Stanzvorgang unterworfen, wodurch das Stanzbauteil 1 generiert wird. Gleichzeitig mit dem Stanzvorgang kann das Metallblech 2 einem Prägevorgang unterworfen werden. Der Stanzvorgang ist in der Figur 2 dargestellt.

Erkennbar ist hier, dass das Metallblech 2 mit dem Polymerfilm 3 von der Seite des Metallblechs 2 her gestanzt wird. Während des Stanzvorgangs wird das auszustanzende Bauteil in der Stanze mittels eines Stempels 5 durch eine korrespondierende Matrize 6 gedrückt. Während dieses Stanzbeziehungsweise Schneidvorgangs wird der Werkstoff des Metallblechs 2 durch den eindringenden Stempel 5 zunächst elastisch verformt. Beim weiteren Eindringen des Stempels 5 in den Werkstoff werden die Werkstofffasern noch weiter, bis die Elastizitätsgrenze des Werkstoffes überschritten wird, so dass eine plastische Verformung eintritt. Der Werkstoff wird von außen nach innen zur Schneide des Stempels 5 gezogen. Dadurch bilden sich am Schnittteil Einziehrundungen.

Bei weiterem Eindringen des Stempels 5 wird auch die Scherfestigkeit des Werkstoffes überschritten. Der Werkstoff wird an der Schneidkante der Matrize 6 und des Stempels 5 abgeschert und bildet Schnittflächen.

Die Festigkeit des verbleibenden Restquerschnitts des Metallblechs ist irgendwann so gering, dass der Werkstoff bricht.

Während dieses Stanzvorgangs wird der Polymerfilm 3 mit dem Haftklebstoff 4 entlang der geschnittenen Seitenkante gezogen. Durch die Scherwirkung beim Stanzvorgang wird der Haftklebstoff 4 unter dem Polymerfilm 3 ausgepresst, und es erfolgt zusätzlich noch eine Versiegelung der Kante des Polymerfilms 3 zum Metallblech 2. Durch den Stanzvorgang erfolgt gleichzeitig die Bildung einer neuen Metallfläche und die Pressung des Haftklebstoffes 4. Hierdurch wird der Haftklebstoff 4 ideal appliziert. Die Bildung einer amorphen Al₂O₃-Schicht durch Autopassivierung, die die Haftung auf dem Metallblech 2 beeinträchtigen könnte, wird durch die Gleichzeitigkeit der Flächenbildung und der Pressung des Haftklebstoffs 4 zuverlässig vermieden. Eine Beizung zum Abtrag der Metalloxide, die bei konventionellen Verfahren üblich ist, ist daher nicht erforderlich.

Nach dem Stanzvorgang wird das Stanzbauteil einem Druckvorgang unterworfen und anschließend mit der Hartstoffschicht in Form des Nanolacks beschichtet.

### Bezugszeichenliste

- 1: Stanzbauteil
- 2: Metallblech
- 3: Polymerfilm
- 4: Haftklebstoff
- 5: Stempel
- 6: Matrize

## Patentansprüche

1. Verfahren zur Herstellung eines Stanzbauteils (1), umfassend die Schritte:
a) auf eine Oberfläche eines Metallblechs (2) wird ein Polymerfilm (3) laminiert,
b) das laminierte Metallblech (2) wird einem Stanzvorgang unterworfen, wodurch das Stanzbauteil (1) generiert wird,
wobei ein Polymerfilm (3) verwendet wird, der an seiner beim Laminiervorgang zum Metallblech (2) weisenden Seite mit einem kaltfließfähigen Haftklebstoff (4) versehen ist, **dadurch gekennzeichnet, dass** zur Ausführung des Stanzvorgangs ein Stempel und eine korrespondierende Matrize verwendet werden, die derart ausgestaltet sind, dass ein Spalt zwischen dem Stempel und der Matrize vorhanden ist, so dass der Polymerfilm (3) und der kaltfließfähige Haftklebstoff (4) während des Stanzvorgangs vor ihrer Durchtrennung entlang der geschnittenen Seitenflächen des Metallblechs gezogen werden.

2. Verfahren nach Anspruch 1, **dadurch gekennzeichnet, dass** ein Polymerfilm (3) verwendet wird, der eines oder eine Mehrzahl der folgenden Materialien aufweist oder daraus besteht:
• Polyvinylchlorid
• Polyethylen
• Polyurethan, insbesondere thermoplastisches Polyurethan.

3. Verfahren nach Anspruch 1 oder 2, **dadurch gekennzeichnet, dass** vor dem Laminieren in Schritt a) die Oberfläche des Metallblechs (2) gebürstet und/oder geschliffen wird.

4. Verfahren nach einem der vorhergehenden Ansprüche, **dadurch gekennzeichnet, dass** die zu laminierende Oberfläche des Metallblechs (2) insbesondere nach dem Bürsten und/oder Schleifen der Oberfläche gereinigt wird.

5. Verfahren nach Anspruch 4, **dadurch gekennzeichnet, dass** während des Reinigens Öl und/oder Fett von der Oberfläche weggebrannt wird, wobei insbesondere für die Verbrennung ein gasförmiger Brennstoff verwendet wird, dem Silan zugesetzt wird, das sich bei der Verbrennung unter Bildung von SiO₂-Partikeln, welche sich auf der zu reinigenden Oberfläche ablagern, zersetzt.

6. Verfahren nach den Ansprüchen 4 oder 5, **dadurch gekennzeichnet, dass** die gereinigte Oberfläche des Metallblechs (2) bedruckt wird, und zwar insbesondere unter Verzicht auf eine auf die Oberfläche aufgebrachte Konversionsschicht.

7. Verfahren nach einem der vorhergehenden Ansprüche, **dadurch gekennzeichnet, dass** nach dem Laminieren in Schritt a) und vor dem Stanzen in Schritt b) der Polymerfilm (3) ausgeheizt wird.

8. Verfahren nach Anspruch 7, **dadurch gekennzeichnet, dass** das Ausheizen bei einer Temperatur zwischen 60°C und 120°C, bevorzugt bei einer Temperatur zwischen 80°C und 100°C, besonders bevorzugt bei einer Temperatur von 90°C, erfolgt und/oder dass das Ausheizen für eine Zeitdauer von 10 min bis 240 min, bevorzugt für eine Zeitdauer von 20 min bis 60 min, besonders bevorzugt für eine Zeitdauer von 30 min, erfolgt.

9. Verfahren nach einem der vorhergehenden Ansprüche, **dadurch gekennzeichnet, dass** das Metallblech (2) vor oder gleichzeitig mit dem Stanzvorgang einem Prägevorgang unterworfen wird und/oder dass der Polymerfilm (3) vor oder nach dem Stanzvorgang bedruckt wird.

10. Verfahren nach einem der vorhergehenden Ansprüche, **dadurch gekennzeichnet, dass** das Stanzbauteil (1) nach dem Stanzvorgang einer tiefziehartigen Umformung unterworfen wird, wobei die maximale Tiefe der Umformung dem 1 bis 10 fachen, bevorzugt dem 5 bis 10 fachen, besonders bevorzugt dem 5 bis 7 fachen, der Dicke des Metallblechs (2) entspricht.

11. Verfahren nach einem der vorhergehenden Ansprüchen, **dadurch gekennzeichnet, dass** die von dem Metallblech (2) wegweisende Oberfläche des Polymerfilms (3) abschließend mit einer Hartstoffschicht, insbesondere in der Form eines Nanolacks, beschichtet wird oder dass ein Polymerfilm (3) verwendet wird, der standardmäßig an der von dem Metallblech (2) wegweisende Oberfläche mit einer Hartstoffschicht ausgestattet ist.

12. Stanzbauteil (1) umfassend ein Metallblech (2) und einen Polymerfilm (3), der auf eine Oberfläche des Metallblechs (2) laminiert und so mit dem Metallblech (2) stoffschlüssig verbunden ist, wobei der Polymerfilm (3) tiefziehfähig ausgebildet ist, wobei der Polymerfilm (3) zur Herstellung der stoffschlüssigen Verbindung zwischen dem Metallblech (2) und dem Polymerfilm (3) an seiner zu dem Metallblech (2) weisenden Seite mit einem kaltfließfähigen Haftklebstoff (4) versehen ist, **dadurch gekennzeichnet, dass** der Polymerfilm mit dem Haftklebstoff über die geschnittenen Seitenflächen des Metallblechs gezogen sind, wobei sich die Anordnung aus Polymerfilm und Haftklebstoff an den Seitenflächen anlegt, um die Seitenflächen zu versiegeln.

13. Stanzbauteil (1) nach Anspruch 12, **dadurch gekennzeichnet, dass** das Metallblech (2) eines oder eine Mehrzahl der folgenden Materialien umfasst oder daraus besteht:
• Aluminium,
• eine Aluminiumlegierung,
• austentischer Cr-Ni-Stahl.

14. Stanzbauteil (1) nach Anspruch 12 oder 13, **dadurch gekennzeichnet, dass** der Polymerfilm (3) eines oder eine Mehrzahl der folgenden Materialien umfasst oder daraus besteht:
• Polyvinylchlorid,
• Polyethylen,
• Polyurethan, insbesondere thermoplastisches Polyurethan.

15. Stanzbauteil (1) nach einem der Ansprüche 12 bis 14, **dadurch gekennzeichnet, dass** der Polymerfilm (3) eine Filmdicke zwischen 1 µm bis 500 µm, bevorzugt eine Filmdicke zwischen 20 µm bis 250 µm, besonders bevorzugt eine Filmdicke zwischen 30 µm bis 160 µm, aufweist und/oder
dass die vom Metallblech (2) wegweisende Oberfläche des Polymerfilms (3) mit einer Hartstoffschicht, insbesondere in der Form eines Nanolacks, beschichtet ist
und/oder
dass der selbstklebende Haftklebstoff (4) eine selbstklebende Acrylatformulierung, insbesondere einen lösungsmittelbasierten Acrylatklebstoff, umfasst oder daraus besteht
und/oder
dass der selbstklebende Haftklebstoff (4) einschichtig oder mehrschichtig an dem Polymerfilm (3) vorgesehen ist und/oder der Polymerfilm (3) insgesamt eine Menge von 10 g/m² bis 100 g/m², besonders bevorzugt von 20 g/m² bis 60 g/m², an Haftklebstoff (4) aufweist
und/oder
dass der Haftklebstoff (4) eine Glasübergangstemperatur zwischen 10°C bis -100°C, bevorzugt eine Glasübergangstemperatur zwischen -10°C bis -80°C, besonders bevorzugt eine Glasübergangstemperatur zwischen -20°C bis -50 °C, aufweist
und/oder
dass das Metallblech (2) und/oder der Polymerfilm (3) bedruckt ist.

## Claims

1. Process for producing a punched component (1) comprising the steps of:
a) a polymer film (3) is laminated onto a surface of a metal sheet (2),
b) the laminated metal sheet (2) is subjected to a punching operation, thereby generating the punched component (1),
wherein a polymer film (3) is used which is provided with a cold flowable pressure-sensitive adhesive (4) on its side facing the metal sheet (2) during the laminating process, **characterized in that** a punch and a corresponding die are used for carrying out the punching process, which are designed such that there is a gap between the punch and the die so that the polymer film (3) and the cold flowable pressure-sensitive adhesive (4) are drawn along the cut side surfaces of the metal sheet during the punching operation before they are cut through.

2. Process according to claim 1, **characterized in that** a polymer film (3) is used which comprises or consists of one or a plurality of the following materials:
- polyvinyl chloride
- polyethylene
- polyurethane, in particular thermoplastic polyurethane.

3. Process according to claim 1 or 2, **characterized in that** before laminating in step a) the surface of the metal sheet (2) is brushed and/or ground.

4. Process according to one of the preceding claims, **characterized in that** the surface of the metal sheet (2) to be laminated is cleaned in particular after brushing and/or grinding the surface.

5. Process according to claim 4, **characterized in that** oil and/or fat is burned away from the surface during cleaning, wherein a gaseous fuel is used, in particular for combustion, to which silane is added, that decomposes during combustion to form SiO₂-particles which are deposited on the surface to be cleaned.

6. Process according to claims 4 or 5, **characterized in that** the cleaned surface of the metal sheet (2) is printed, in particular without a conversion layer applied to the surface.

7. Process according to one of the preceding claims, **characterized in that,** after laminating in step a) and before punching in step b), the polymer film (3) is baked out.

8. Process according to claim 7, **characterized in that** the heating is carried out at a temperature between 60°C and 120°C, preferably at a temperature between 80°C and 100°C, particularly preferably at a temperature of 90° C, and/or **in that** the heating is carried out for a period of 10 min to 240 min, preferably for a period of 20 min to 60 min, particularly preferably for a period of 30 min.

9. Process according to one of the preceding claims, **characterized in that** the metal sheet (2) is subjected to an embossing operation before or simultaneously with the punching operation and/or that the polymer film (3) is printed before or after the punching operation.

10. Process according to one of the preceding claims, **characterized in that** the punched component (1) is subjected after the punching operation to a deep-drawing deformation, the maximum depth of the deformation corresponding to 1 to 10 times, preferably 5 to 10 times, particularly preferably 5 to 7 times, the thickness of the metal sheet (2).

11. Process according to one of the preceding claims, **characterized in that** the surface of the polymer film (3) facing away from the metal sheet (2) is finally coated with a hard material layer, in particular in the form of a nano-lacquer, or **in that** a polymer film (3) is used which is provided with a hard material layer as standard on the surface facing away from the metal sheet (2).

12. Punched component (1) comprising a metal sheet (2) and a polymer film (3) laminated to a surface of the metal sheet (2) and thus bonded to the metal sheet (2) by a material bond, wherein the polymer film (3) is formed to be deep-drawable, the polymer film (3) being provided with a cold-flowable pressure-sensitive adhesive (4) on its side facing the metal sheet (2) in order to produce the material-locking connection between the metal sheet (2) and the polymer film (3), **characterized in that** the polymer film with the pressure-sensitive adhesive is pulled over the cut side surfaces of the metal sheet, the arrangement of the polymer film and the pressure-sensitive adhesive being applied to the side surfaces to seal the side surfaces.

13. Punched component (1) according to claim 12, **characterized in that** the metal sheet (2) comprises or consists of one or a plurality of the following materials:
- aluminium,
- an aluminum alloy,
- austenitic Cr-Ni steel.

14. Punched component (1) according to claim 12 or 13, **characterized in that** the polymer film (3) comprises or consists of one or a plurality of the following materials:
- polyvinyl chloride,
- polyethylene,
- polyurethane, in particular thermoplastic polyurethane.

15. Punched component (1) according to one of claims 12 to 14, **characterized in that** the polymer film (3) has a film thickness between 1 µm and 500 µm, preferably a film thickness between 20 µm and 250 µm, particularly preferably a film thickness between 30 µm and 160 µm, and/or
**in that** the surface of the polymer film (3) facing away from the metal sheet (2) is coated with a hard material layer, in particular in the form of a nano-lacquer, and/or
**in that** the self-adhesive pressure-sensitive adhesive (4) comprises or consists of a self-adhesive acrylate formulation, in particular a solvent-based acrylate adhesive, and/or
**in that** the self-adhesive pressure-sensitive adhesive (4) is provided in one or more layers on the polymer film (3) and/or the polymer film (3) has a total amount of pressure-sensitive adhesive (4) of from 10 g/m² to 100 g/m², particularly preferably from 20 g/m² to 60 g/m², and/or
**in that** the pressure-sensitive adhesive (4) has a glass transition temperature between 10°C and -100°C, preferably a glass transition temperature between -10°C and -80°C, particularly preferably a glass transition temperature between -20°C and -50°C, and/or
**in that** the metal sheet (2) and/or the polymer film (3) is printed.

## Revendications

1. Procédé de fabrication d'un composant poinçonné (1) comprenant les étapes consistant à :
a) un film polymère (3) est laminé sur une surface d'une tôle métallique (2),
b) la tôle métallique (2) est soumise à une opération de poinçonnage, générant ainsi le composant poinçonné (1),
un film polymère étant utilisé (3) qui est muni d'un adhésif sensible à la pression (4) capable au fluage á froid sur sa face tournée vers la tôle métallique (2) pendant le processus de laminage, **caractérisé en ce qu'**un poinçon et une matrice correspondante sont utilisés pour effectuer l'opération de poinçonnage, qui sont conçus de telle sorte qu'il y ait un espace entre le poinçon et la matrice de sorte que le film polymère (3) et l'adhésif sensible á la pression (4) capable au fluage à froid sont tirés le long des surfaces latérales coupées de la tôle métallique pendant l'opération de poinçonnage avant d'être coupés.

2. Procédé selon la revendication 1, **caractérisé en ce qu'**un film polymère (3) est utilisé qui comprend ou consiste en un ou plusieurs des matériaux suivants :
- chlorure de polyvinyle
- polyéthylène
- polyuréthane, en particulier polyuréthane thermoplastique.

3. Procédé selon la revendication 1 ou 2, **caractérisé en ce que** la surface de la tôle métallique (2) est brossée et/ou poncée avant le laminage à l'étape a).

4. Procédé selon l'une des revendications précédentes, **caractérisé en ce que** la surface de la tôle métallique (2) à laminer est nettoyée en particulier après brossage et/ou ponçage de la surface.

5. Procédé selon la revendication 4, **caractérisé en ce que** de l'huile et/ou de la graisse est brulée de la surface pendant le nettoyage, en utilisant un combustible gazeux, en particulier pour la combustion, auquel on ajoute du silane, qui se décompose pendant la combustion pour former des particules qui sont déposées à la surface à nettoyer.

6. Procédé selon la revendication 4 ou 5, **caractérisé en ce que** la surface nettoyée de la tôle métallique (2) est imprimée, en particulier sans couche de conversion appliquée sur la surface.

7. Procédé selon l'une des revendications précédentes, **caractérisé en ce que,** après laminage à l'étape a) et avant poinçonnage à l'étape b), le film polymère (3) est cuit.

8. Procédé selon la revendication 7, **caractérisé en ce que** le chauffage est effectué à une température comprise entre 60°C et 120°C, de préférence à une température comprise entre 80°C et 100°C, en particulier de préférence à une température de 90°C, et/ou **en ce que** le chauffage est effectué pendant une durée de 10 min à 240 min, de préférence pendant une durée de 20 min à 60 min, particulièrement de 30 min.

9. Procédé selon l'une des revendications précédentes, **caractérisé en ce que** la tôle métallique (2) est soumise à une opération de gaufrage avant ou simultanément à l'opération de poinçonnage et/ou **en ce que** le film polymère (3) est imprimé avant ou après l'opération de poinçonnage.

10. Procédé selon l'une des revendications précédentes, **caractérisé en ce que** le composant poinçonné (1) est soumis après l'opération de poinçonnage à un formage par emboutissage profond, la profondeur maximale du formage correspondant à 1 à 10 fois, de préférence 5 à 10 fois, en particulier 5 à 7 fois, l'épaisseur de la tôle métallique (2).

11. Procédé selon l'une des revendications précédentes, **caractérisé en ce que** la surface du film polymère (3) opposée à la tôle métallique (2) est finalement revêtue d'une couche de matériau dur, en particulier sous la forme d'un nanolasure, ou **en ce qu'**un film polymère (3) est utilisé qui est pourvu en série d'une couche de matériau dur sur la surface opposée à la tôle métallique (2).

12. Composant poinçonné (1) comprenant une tôle métallique (2) et un film polymère (3) laminé sur une surface de la tôle métallique (2) et ainsi lié à la tôle métallique (2) par une liaison matérielle, le film polymère (3) étant formé pour être embouti profondément, le film polymère (3) étant muni d'un adhésif sensible à la pression (4) capable au fluage à froid sur sa face tournée vers la tôle métallique (2) afin de produire la liaison matérielle entre la tôle métallique (2) et le film polymère (3), **caractérisé en ce que** le film polymère avec l'adhésif sensible à la pression est tiré sur les surfaces latérales coupées de la tôle métallique, l'arrangement du film polymère et de l'adhésif sensible à la pression étant appliqué sur les surfaces latérales pour sceller les surfaces latérales.

13. Composant poinçonné (1) selon la revendication 12, **caractérisé en ce que** la tôle métallique (2) est constituée d'un ou plusieurs des matériaux suivants :
- aluminium,
- un alliage d'aluminium,
- acier austénitique Cr-Ni.

14. Composant poinçonné (1) selon la revendication 12 ou 13, **caractérisé en ce que** le film polymère (3) comprend ou consiste en un ou plusieurs des matériaux suivants :
- chlorure de polyvinyle,
- polyéthylène,
- polyuréthane, en particulier polyuréthane thermoplastique.

15. Composant poinçonné (1) selon l'une des revendications 12 à 14, **caractérisé en ce que** le film polymère (3) présente une épaisseur de film comprise entre 1 µm et 500 µm, de préférence entre 20 µm et 250 µm, en particulier entre 30 µm et 160 µm, et/ou
**en ce que** la surface du film polymère (3) tournée à l'opposé de la tôle métallique (2) est revêtue d'une couche de matériau dur, en particulier sous la forme d'un nanolasure, et/ou
**en ce que** l'adhésif autocollant sensible à la pression (4) comprend ou consiste en une formulation acrylate auto-adhésive, en particulier un adhésif acrylate à base de solvant, et/ou
**en ce que** l'adhésif autocollant (4) est prévu en une ou plusieurs couches sur le film polymère (3) et/ou le film polymère (3) présente une quantité totale d'adhésif sensible à la pression (4) de 10 g/m² à 100 g/m², de préférence de 20 g/m² à 60 g/m² en particulier, et/ou
**en ce que** l'adhésif sensible à la pression (4) présente une température de transition vitreuse comprise entre 10°C et -100°C, de préférence une température de transition vitreuse comprise entre -10°C et -80°C, en particulier de préférence entre -20°C et -50°C, et/ou
**en ce que** la tôle métallique (2) et/ou le film polymère (3) est imprimé.
